# EUROPEAN PATENT APPLICATION

(11) **EP 3 470 268 A1**
(43) Date of publication of application: **17.04.2019**
(21) Application number: 18158359.2
(22) Date of filing: 23.02.2018
(51) Int. Cl.: B60Q 1/115, B60Q 1/12

(54) **VEHICLE ILLUMINATION DEVICE**

(30) Priority: 11.10.2017 TW 106134750
(71) Applicant: Depo Auto Parts Ind. Co., Ltd., Lukang Township, Changhua County 505 (TW)
(72) Inventor: GUO, Ming-Syun, Tainan City (TW)
(74) Representative: Viering, Jentschura & Partner mbB Patent- und Rechtsanwälte

(57) **Abstract**

Disclosed is a vehicle illumination device (D) which includes a support mount (1), a power driving assembly (2), an adjusting mechanism (3), and a lens assembly (4). The power driving assembly (2) and the adjusting mechanism (3) are arranged on the support mount (1). The adjusting mechanism (3) is configured to be driven by the power driving assembly (2) to tilt the lens assembly (4) in a left-right direction and/or an up-down direction. Therefore, when the vehicle is cruising uphill/downhill or is making turns, the driver's view distance can be increased and the blind spots can be reduced.

## Description

### BACKGROUND OF THE INVENTION

### 1. Field of the Invention

The instant disclosure relates to an illumination device, and more particularly to a vehicle illumination device.

### 2. Description of Related Art

The vehicle headlamps, referred to by some as the car's eyes, are very important to driving safety. A conventional headlamp is mounted at a fixed angle and the illumination angle thereof cannot be changed. This may result in narrowing a driver's view region when the driver is cruising uphill or downhill, or is making turns. Under the circumstances, the driver reacting quickly to oncoming road conditions becomes more difficult than usual, thus leading to an increasing risk of traffic accidents; especially when cruising in the nighttime under the condition without street lights.

With the progressive advancement in car technology, more and more attention has been paid to driving safety. To improve driving safety, major car manufactures have developed headlamp devices with adjustable lighting angles, which can cooperate with a vehicle computer system to provide road-adaptive illumination for the driver. However, the conventional transmission mechanism in the headlamp device is a rather complicated mechanism, which cannot meet the miniaturization requirement and often occupies a large amount of space. In addition, such a complicated mechanical design may also result in an ineffective operation performance, thus causing an improper rotation of the headlamp and a loss of stability. For example, the headlamp device as disclosed in the Chinese Patent No. 201291803Y still has the above-mentioned problems.

### SUMMARY OF THE INVENTION

One aspect of the instant disclosure relates to a vehicle illumination device using a dual-axis illumination angle adjusting mechanism to simplify the conventional transmission mechanism in a vehicle lamp device and increase vehicle space utilization.

One of the embodiments of the instant disclosure provides a vehicle illumination device which includes a support mount, a driving unit, an adjusting mechanism, and a lens assembly. The driving unit is arranged on the support mount. The adjusting mechanism includes a slide and swing assembly arranged on the support mount and a pivot joint assembly arranged on the support mount opposite to the slide and swing assembly. The slide and swing assembly includes a guide rail, a connecting holder driven by the driving unit to slide on the guide rail, and a shaft body connected to the connecting holder. The lens assembly has a top end connected to the pivot joint assembly and a bottom end pivoted on the shaft body. The adjusting mechanism is configured to be driven by the driving unit to adjust a tilt angle of the lens assembly relative to a horizontal reference plane.

Furthermore, the bottom portion of the swing seat has a first accommodation space to rotatably accommodate the first rotation member.

Furthermore, the connecting holder includes a slide base coupled to the guide rail, a coupling socket arranged on the slide base, and a coupling cover arranged on one side of the coupling socket to rotatably accommodate the second rotation member.

Furthermore, the pivot joint assembly includes a connecting plate, a third rotation element, a position-limiting cover, and a stop element. The connecting plate has a support shaft passing through an open slot on a top portion of the support mount. The third rotation element is mounted for rotation on the support shaft. The position-limiting cover is connected to the top portion of the support mount to provide a second accommodation space together with the open slot to rotatably accommodate the third rotation element. The stop element is engaged to the support shaft to secure the third rotation element.

Furthermore, the bottom portion of the lens assembly includes two first connecting covers and the shaft body has two opposite ends each having a ball shaft and a second connecting cover. Each of the two first connecting covers is connected to the corresponding second connecting cover to cooperatively cover the corresponding ball shaft and enable rotation of the corresponding ball shaft about the axis of the shaft body.

Based on the above, the vehicle illumination device according to the disclosure can provide automatic adjustment of illumination angles according to different road conditions and external environmental conditions. Therefore, when cruising uphill/downhill or making turns, the driver's view distance can be increased and the number of blind spots can be reduced. Furthermore, the first and second rotation assemblies of the adjusting mechanism are driven via the ball joints and rotate in the left-right direction and in the up-down direction by the first and second rotation elements. Therefore, the adjustment accuracy and stability of an illumination angle of the lens assembly can be well ensured.

To further understand the techniques, means and effects of the instant disclosure, the following detailed descriptions and appended drawings are hereby referred to, such that, and through which, the purposes, features and aspects of the instant disclosure can be thoroughly and concretely appreciated. However, the appended drawings are provided solely for reference and illustration, without any intention to limit the instant disclosure.

### BRIEF DESCRIPTION OF THE DRAWINGS

The accompanying drawings are included to provide a further understanding of the instant disclosure, and are incorporated in and constitute a part of this specification. The drawings illustrate exemplary embodiments of the instant disclosure and, together with the description, serve to explain the principles of the instant disclosure.
FIG. 1 is a three-dimensional assembled view taken from a view angle of the vehicle illumination device of the instant disclosure;
FIG. 2 is a three-dimensional assembled view taken from another view angle of the vehicle illumination device of the instant disclosure;
FIG. 3 is an exploded schematic view of the vehicle illumination device of the instant disclosure without the second power driving unit, the second rotation assembly, the pivot joint assembly, and the lens assembly;
FIG. 4 is an exploded schematic view of the vehicle illumination device of the instant disclosure without the first power driving unit, the first rotation assembly, the pivot joint assembly, and the lens assembly;
FIG. 5 is an exploded schematic view of the vehicle illumination device of the instant disclosure without the first and second rotation assemblies;
FIG. 6 is a three-dimensional exploded view of the vehicle illumination device of the instant disclosure;
FIG. 7 is a schematic view showing that a vehicle using the vehicle illumination device of the instant disclosure is making a turn.
FIG. 8 is a schematic view showing the vehicle illumination device of the instant disclosure having a tilt-left movement;
FIG. 9 is a cross-sectional view taken along the line IX-IX in FIG. 8.
FIG. 10 is a schematic view showing the vehicle illumination device of the instant disclosure having a tilt-right movement;
FIG. 11 is a cross-sectional view taken along the line XI-XI in FIG. 10;
FIG. 12 is a schematic view showing that a vehicle using the vehicle illumination device of the instant disclosure is cruising uphill.
FIG. 13 is a schematic view showing that a vehicle using the vehicle illumination device of the instant disclosure is cruising downhill.
FIG. 14 is a schematic view showing the vehicle illumination device of the instant disclosure having a tilt-up movement;
FIG. 15 is a schematic view showing the vehicle illumination device of the instant disclosure having a tilt-down movement; and
FIGS. 16 and 17 are schematic views respectively showing tilting movements toward lower right and upper right of the vehicle illumination device of the instant disclosure.

### DETAILED DESCRIPTION OF THE PREFERRED EMBODIMENTS

An embodiment of a vehicle illumination device according to the instant disclosure is described herein. Other advantages and objectives of the instant disclosure can be easily understood by one skilled in the art from the disclosure. The instant disclosure can be applied in different embodiments. Various modifications and variations can be made to various details in the description for different applications without departing from the scope of the instant disclosure. The drawings of the instant disclosure are provided only for simple illustrations, but are not drawn to scale and do not reflect the actual relative dimensions. The following embodiment is provided to describe in detail the concept of the instant disclosure, and is not intended to limit the scope thereof in any way.

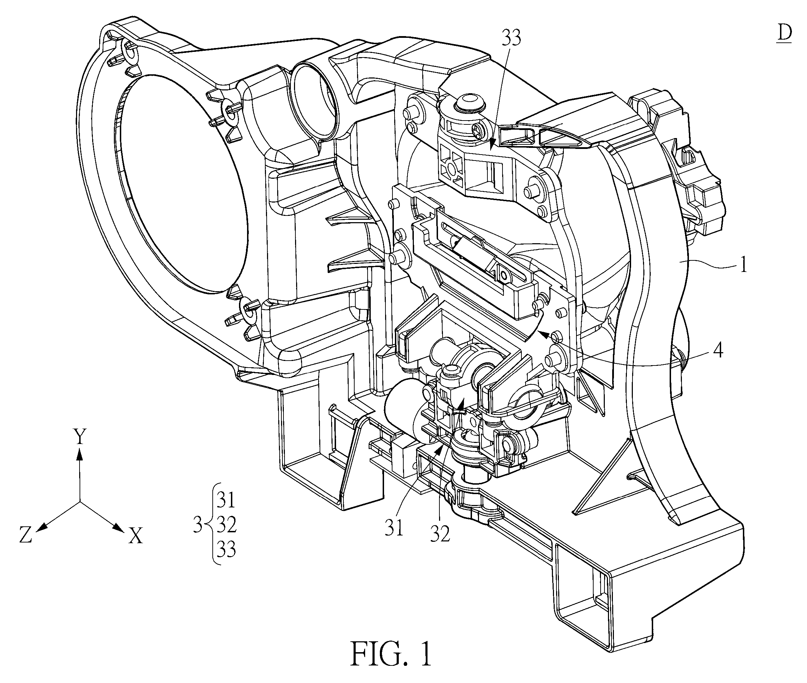

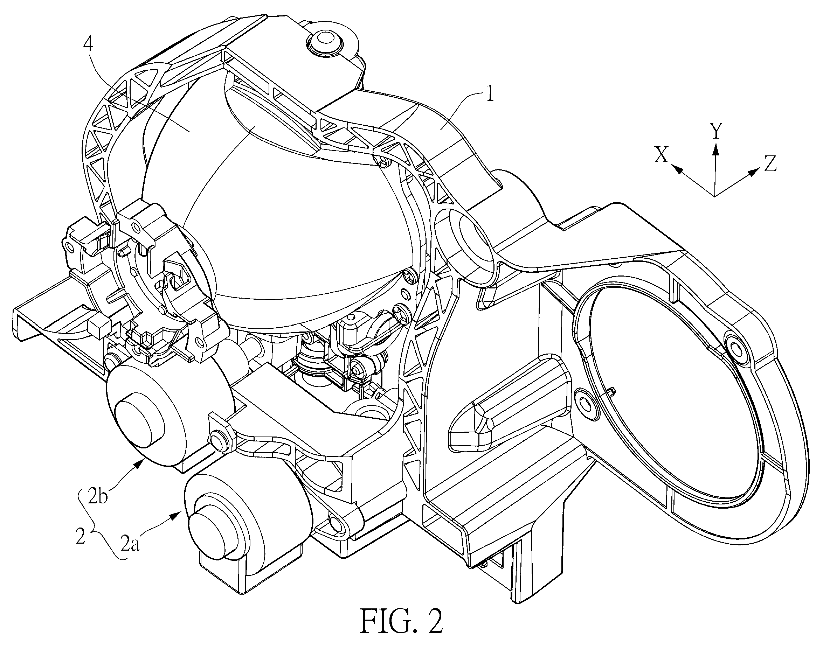

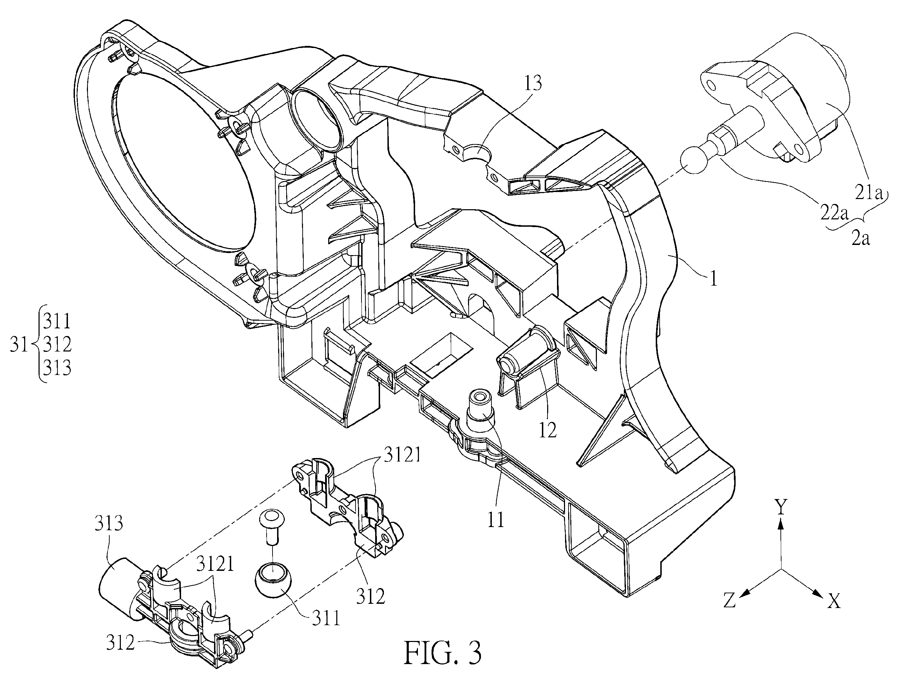

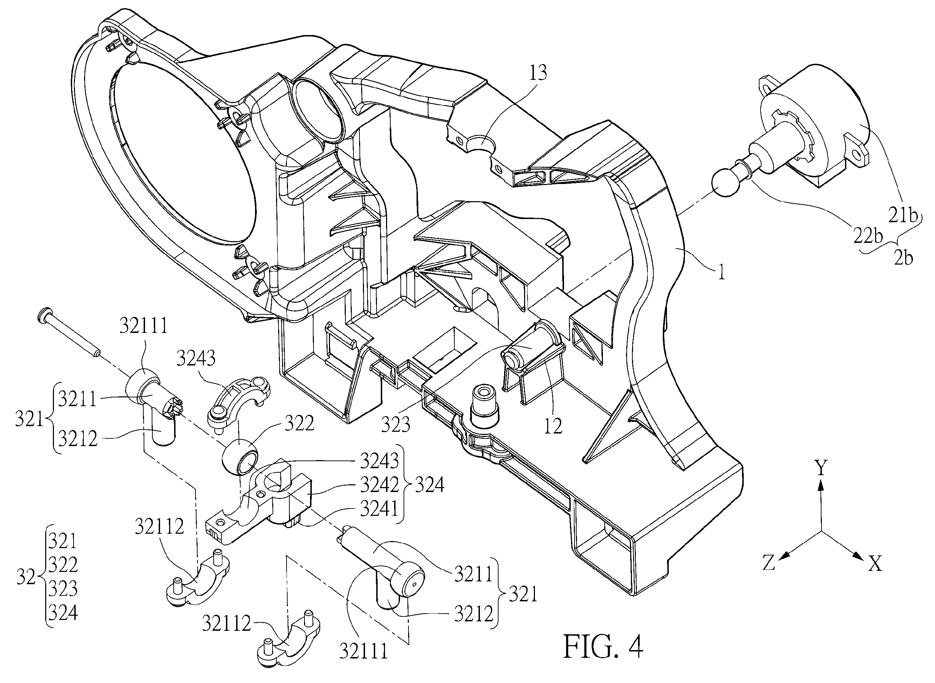

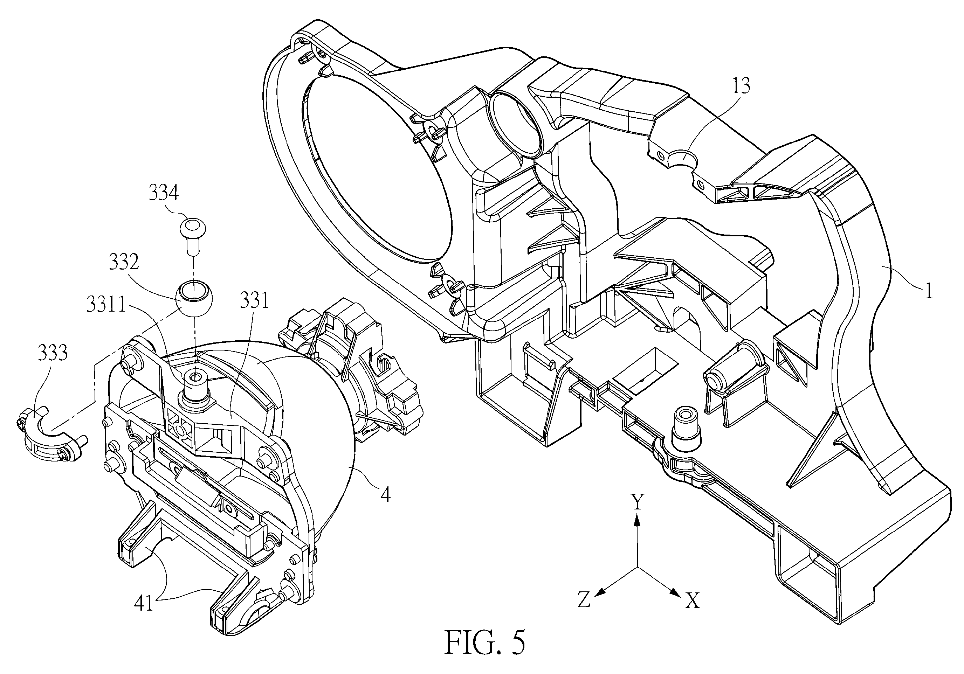

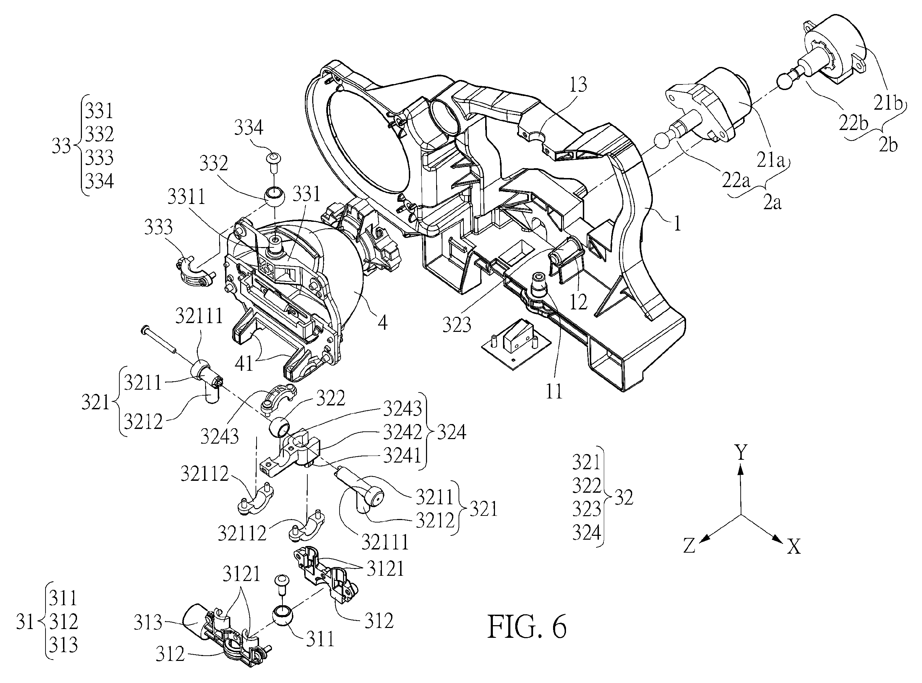

Please refer to FIGS. 1 to 6. An embodiment of the present invention provides a vehicle illumination device D which includes a support mount 1, a power driving assembly 2, an adjusting mechanism 3, and a lens assembly 4. The power driving assembly 2 and the adjusting mechanism 3 are arranged on the support mount 1. The adjusting mechanism 3 is configured to be driven by the power driving assembly 2 to adjust a tilt angle of the lens assembly 4 between a horizontal reference plane and a vertical reference plane. That is to say, the adjusting mechanism 3 can tilt the lens assembly 4 in an up-down direction and a left-right direction. Accordingly, the vehicle illumination device D can be used with an automatic control system (not shown) to provide automatic adjustment of illumination angle according to different road conditions and external environmental conditions. Therefore, a better illumination condition can be obtained to ensure driving safety despite poor visibility.

The support mount 1 includes a frame-type main body which provides a sufficient space for installation of the power driving assembly 2, the adjusting mechanism 3, and the lens assembly 4 including a lens, a reflector, a light source, etc. Accordingly, the power driving assembly 2, the adjusting mechanism 3, and the lens assembly 4 can be incorporated easily in a vehicle headlamp by the support mount 1.

The power driving assembly 2 is configured to actuate the adjusting mechanism 3 and includes a first power driving unit 2a and a second power driving unit 2b. The first power driving unit 2a is configured to provide power to rotate the lens assembly 4 in the left-right direction. The second power driving unit 2b is configured to provide power to rotate the lens assembly 4 in the up-down direction. It should be noted that the first and second power driving units 2a, 2b can work together to tilt the lens assembly 4 toward upper left, upper right, lower left, and lower right directions by the adjusting mechanism 3.

For the instant embodiment, the first and second power driving units 2a, 2b each include an actuator 21a, 21b and a ball rod 22a, 22b connected to the actuator 21a, 21b. The ball rod 22a, 22b can be controlled by the actuator 21a, 21b to perform a forward or backward movement along a horizontal axis. In practice, the first and second power driving units 2a, 2b are installed on one side of the support mount 1 by at least one fixing member, such as a fixing screw (not numbered), but the instant disclosure is not limited thereto.

The adjusting mechanism 3 includes a first rotation assembly 31, a second rotation assembly 32, and a pivot joint assembly 33. The first rotation assembly 31 can be pushed or pulled by the first power driving unit 2a to rotate in the left-right direction relative to the X-Z plane. The first rotation assembly 31 includes a first rotation member 311, a swing seat 312, and a coupling structure 313. The first rotation member 311 is mounted for rotation on a pivot shaft 11 which is disposed at a bottom portion of the support mount 1. The swing seat 312 has a bottom portion connected to the pivot shaft 11 via the first rotation member 311. More specifically, the bottom portion of the swing seat 312 has an accommodation space (first accommodation space) to rotatably accommodate the first rotation member 311. The swing seat 312 has a top portion with a pair of pole sleeves 3121 for installing the second rotation assembly 32. The coupling structure 313 is connected to one side of the swing seat 312 to be driven by the first power driving unit 2a.

For the instant embodiment, the first rotation element 311 is, but not limited to, a drilled ball. The coupling structure 313 is integrally formed with the swing seat 312 and extends from one side of the swing seat 312. The coupling structure 313 has a ball socket to engage with a ball head (not numbered) of the ball rod 22a to form a ball joint. That is to say, the coupling structure 313 can limit the movement of the ball head and allow a smooth rotation of the ball head.

The second rotation assembly 32 can be pushed or pulled by the first power driving unit 2a to rotate in the up-down direction relative to the Y-Z plane. The second rotation assembly 32 includes a swing structure 321, a second rotation member 322, a guide rail 323, and a connecting holder 324. The swing structure 321 includes a shaft body 3211 and a pair of connecting poles 3212 which are connected to the shaft body 3211 and extend in a direction perpendicular to the axis of the shaft body 3211 to movably couple with the pole sleeves 3121. More specifically, the connecting poles 3212 are interlinked with the pole sleeves 3121 for an upward and downward telescopic movement. That is to say, the connecting poles 3212 are axially movable relative to the pole sleeves 3121 between an extended position and a retracted position. The second rotation member 322 is mounted for rotation on the shaft body 3211 and between the connecting poles 3212. The guide rail 323 is mounted on a fixing bracket 12 which is disposed at the bottom portion of the support mount 1, wherein the fixing bracket 12 is arranged parallel to a working path of the second power driving unit 2b. One end of the connecting holder 324 is connected to the shaft body 3211 via the second rotation member 322, and the other end of the connecting holder 324 is drivingly connected to the actuator 21b via the ball rod 22b. Accordingly, the connecting holder 324 can reciprocately slide on the guide rail 323 and move together with the swing structure 321.

For the instant embodiment, the swing structure 321 can be constituted by two integrated parts or two assembled parts. The second rotation element 322 is, but not limited to, a drilled ball. The guide rail 323 is cylindrical in shape and is positioned in a limit slot (not numbered) of the fixing bracket 12 by at least one fixing member, such as a fixing screw, but is not limited thereto. The connecting holder 324 includes a slide base 3241, a coupling socket 3242, and a coupling cover 3243. The slide base 3241 has a shape matching the cross-sectional shape of a portion of the guide rail 311 exposed from the limit slot. The coupling socket 3242 is arranged on the slide base 3241. The coupling socket 3242 is a ball socket to engage with a ball head (not numbered) of the ball rod 22b to form another ball joint. The coupling socket 3242 can limit the movement of the ball head and allow smooth rotation of the ball head. The coupling cover 3243 is arranged on one side of the coupling socket 3242 to rotatably accommodate the second rotation member 322.

The pivot joint assembly 33 is arranged on a top portion of the support mount 1 and corresponds in location to the first rotation assembly 31 and the second rotation assembly 32. The pivot joint assembly 33 includes a connecting plate 331, a third rotation element 332, a position-limiting cover 333, and a stop element 334. To install the pivot joint assembly 33, the third rotation element 332 is mounted for rotation on a support shaft 3311 of the connecting plate 331, and the stop element 334 is engaged to the support shaft 3311 to secure the third rotation element 332. After that, the third rotation element 332 is arranged in an open slot 13 formed at the top portion of the support mount 1, and is attached to the inner wall of the open slot 13. Finally, the position-limiting cover 333 is connected to the top portion of the support mount 1 to cover the third rotation element 332. The position-limiting cover 333 can provide an accommodation space (second accommodation space) together with the open slot 13 to rotatably accommodate the third rotation element 332, and limit the movement of the third rotation element 332.

For the instant embodiment, there is no particular restriction as to the shape of the connecting plate 331. The third rotation element 332 is, but not limited to, a drilled ball. The position-limiting cover 333 is approximately U-shaped and faces the open slot 13. The position-limiting cover 333 is fixed to the top portion of the support mount 1 by at least one fixing member, such as a fixing screw (not numbered). The stop element 324 is, but not limited to, a screw member which can be fitted in an axial hole (not numbered) of the support shaft 3311.

The bottom portion of the lens assembly 4 includes two first connecting covers 41. The shaft body 3211 has two opposite ends each have a ball shaft 32111 and a second connecting cover 32112. Each of the two first connecting covers 41 is connected to the corresponding second connecting cover 32112 to cooperatively cover the corresponding ball shaft 32111 and enable rotation of the corresponding ball shaft 32111 about the axis of the shaft body 3211. Accordingly, the adjustment accuracy and stability of an illumination angle of the lens assembly 4 can be well ensured. For the instant embodiment, the first and second connecting covers 41, 32112 are approximately U-shaped and are connected together by at least one fixing member, such as a fixing screw (not numbered).

The structural features of the vehicle illumination device D are described in detail above. The following will further describe how the vehicle illumination device D can change its illumination region according to different road conditions.

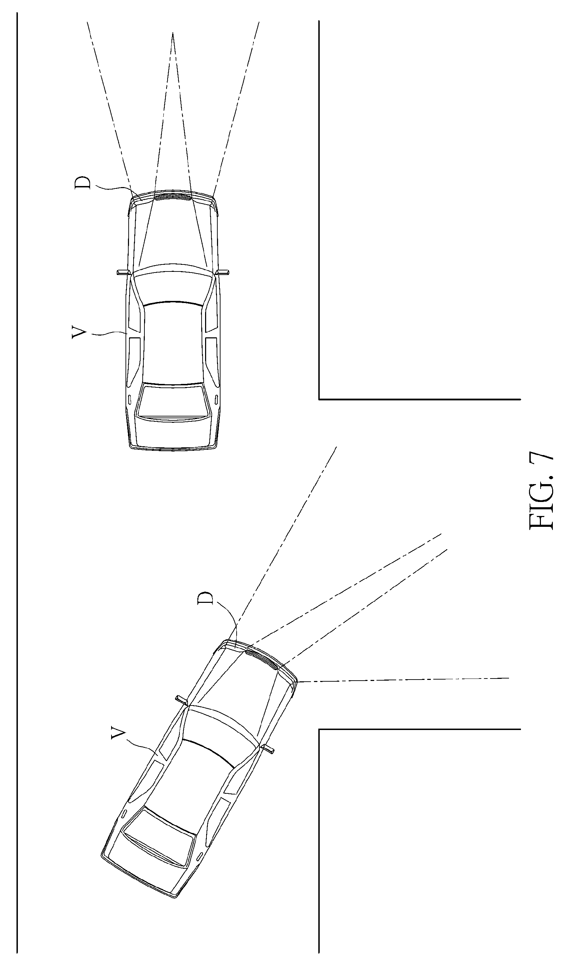

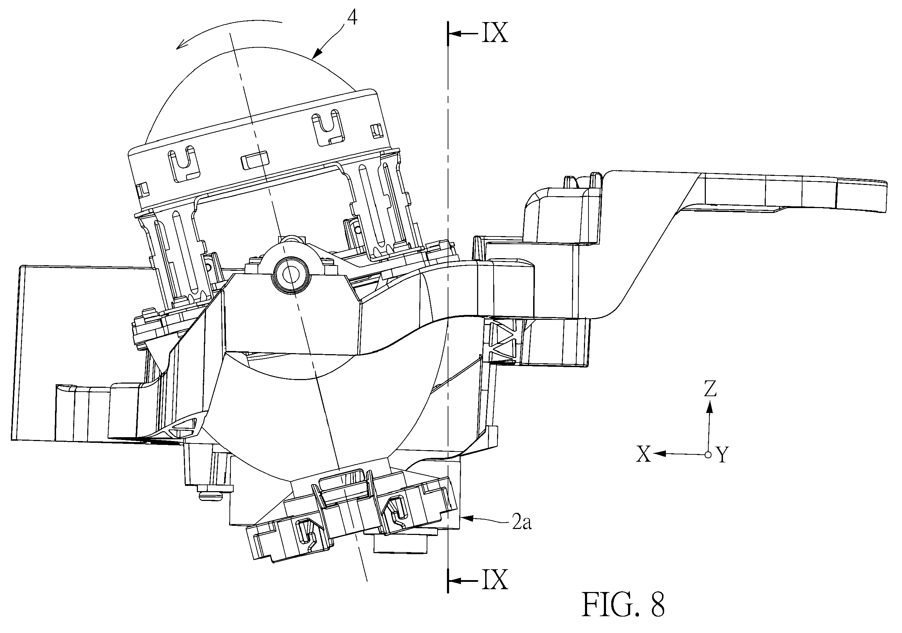

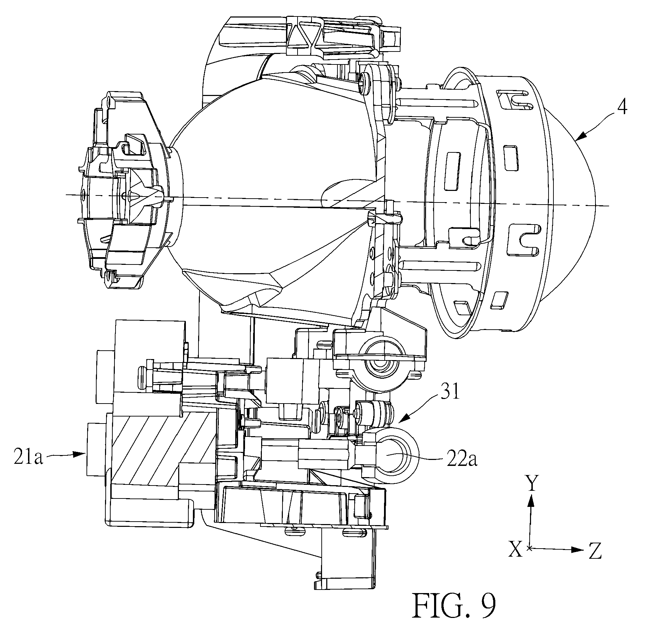

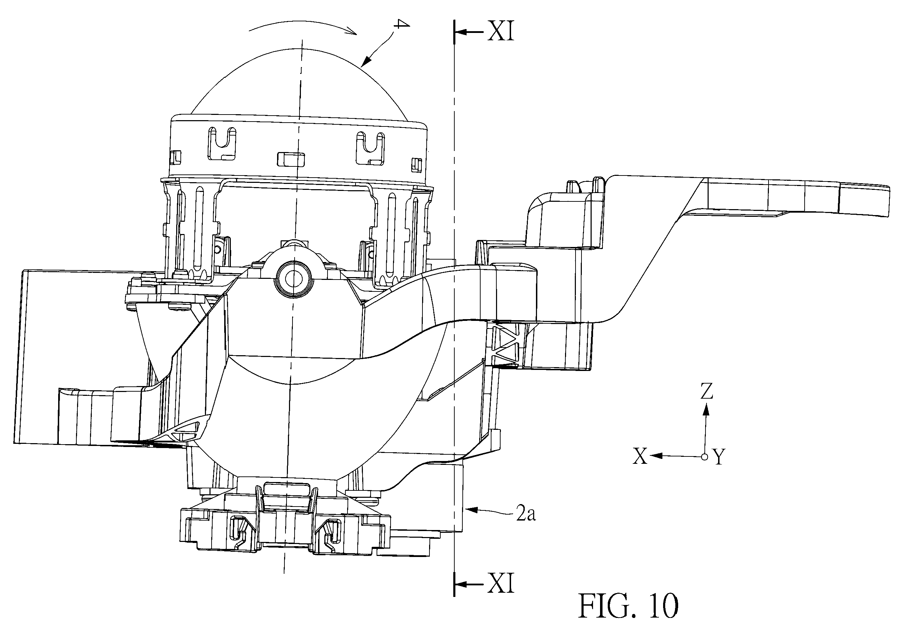

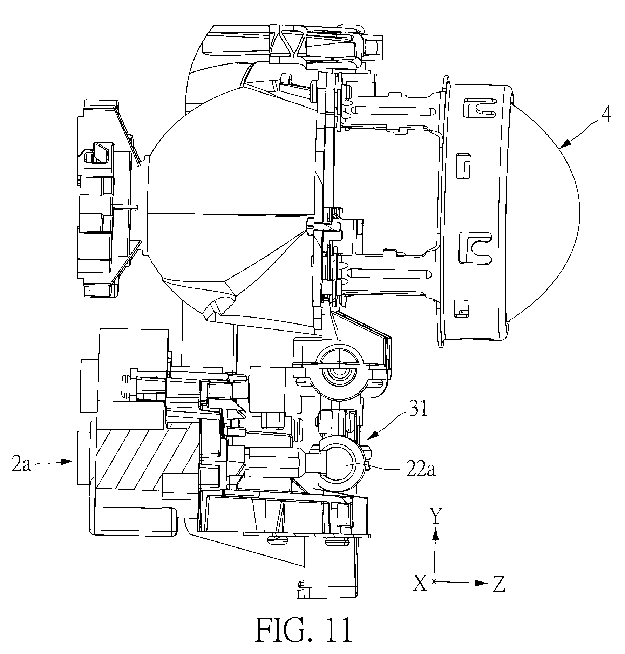

Please refer to FIGS. 7 to 11. When a vehicle V is making a turn, the vehicle illumination device D mounted on the vehicle V can be controlled by an automatic control system to immediately perform a tilt-left or tilt-right movement of the lens assembly 4 with a predetermined angle. Therefore, while making a turn, a front left-hand side or front right-hand side of the vehicle V can be illuminated to increase the driver's view distance and decrease the number of blind spots. In the course of the tilt-left movement of the lens assembly 4, as shown in FIGS. 8 and 9, the ball rod 22a is controlled by the actuator 21a and extends outwardly to push the first rotation assembly 31 to rotate left. In the course of the tilt-right movement of the lens assembly 4, as shown in FIGS. 10 and 11, the ball rod 22a is controlled by the actuator 21a and retracts inwardly to pull the first rotation assembly 31 to rotate right.

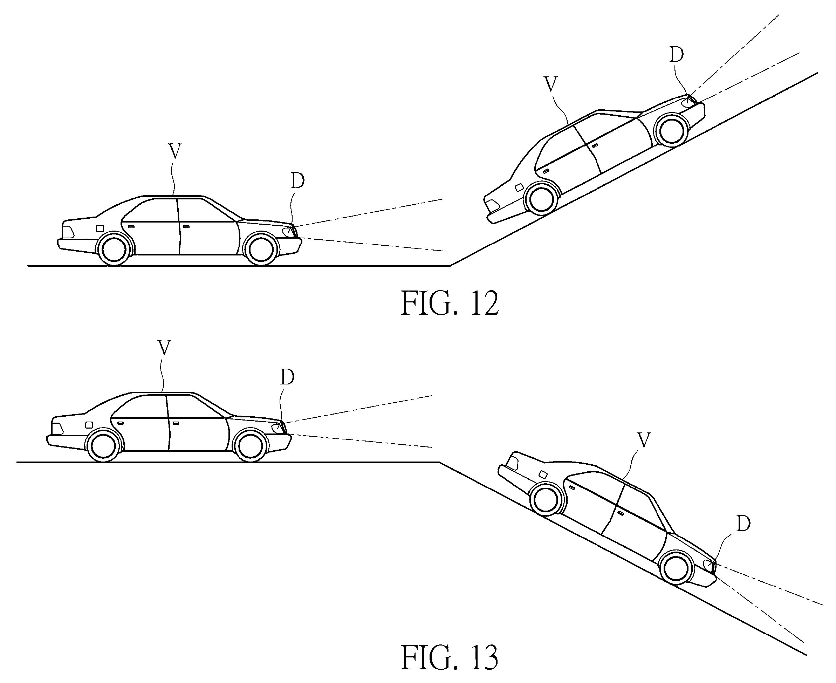

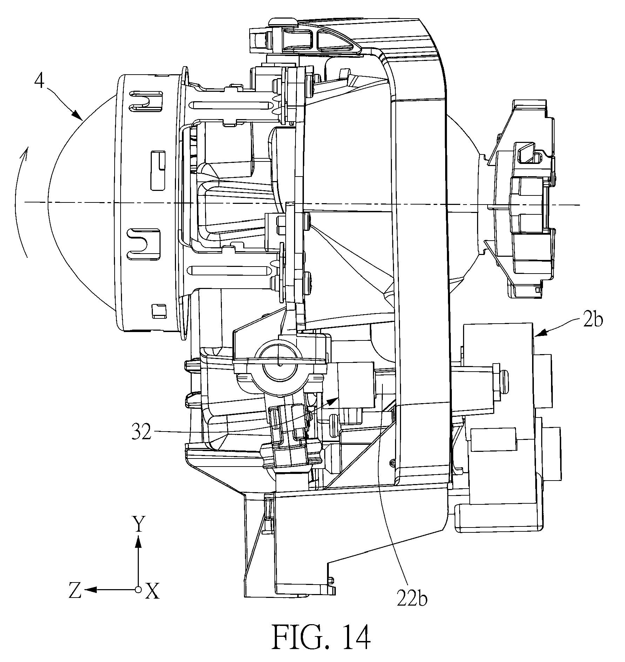

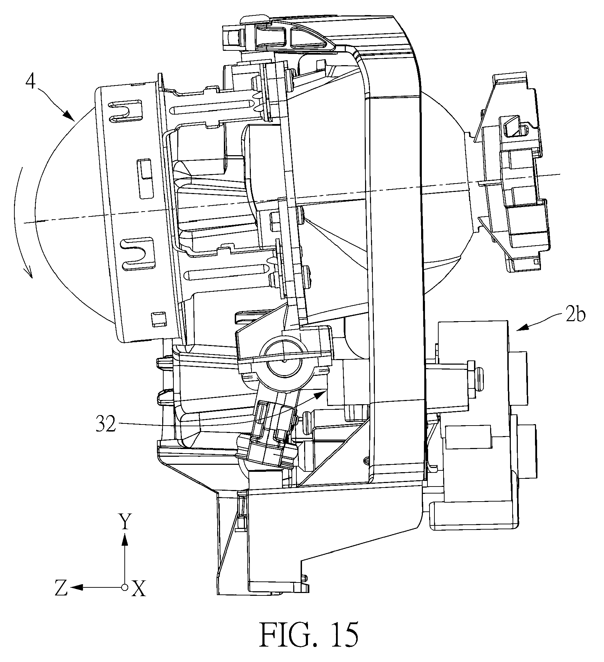

Please refer to FIGS. 12 to 15. When a vehicle V is cruising uphill or downhill, the vehicle illumination device D mounted on the vehicle V can be controlled by the automatic control system to immediately perform a tilt-up or tilt-down movement of the lens assembly 4 with a predetermined angle. Therefore, while cruising uphill or downhill, upward or downward illumination in front of the vehicle V can be provided to increase the driver's view distance and decrease the number of blind spots. In the course of the tilt-up movement of the lens assembly 4, as shown in FIG. 14, the ball rod 22b is controlled by the actuator 21b and extends outwardly to push the second rotation assembly 32 to rotate upward. In the course of the tilt-down movement of the lens assembly 4, as shown in FIG. 15, the ball rod 22b is controlled by the actuator 21b and retracts inwardly to pull the second rotation assembly 32 to rotate downward.

It should be noted that, the first power driving unit 2a drives the first rotation assembly 31 by a ball joint, and the second power driving unit 2b drives the second rotation assembly 32 by another ball joint. Therefore, the adjustment of an illumination angle of the lens assembly 4 with high accuracy and high stability can be ensured.

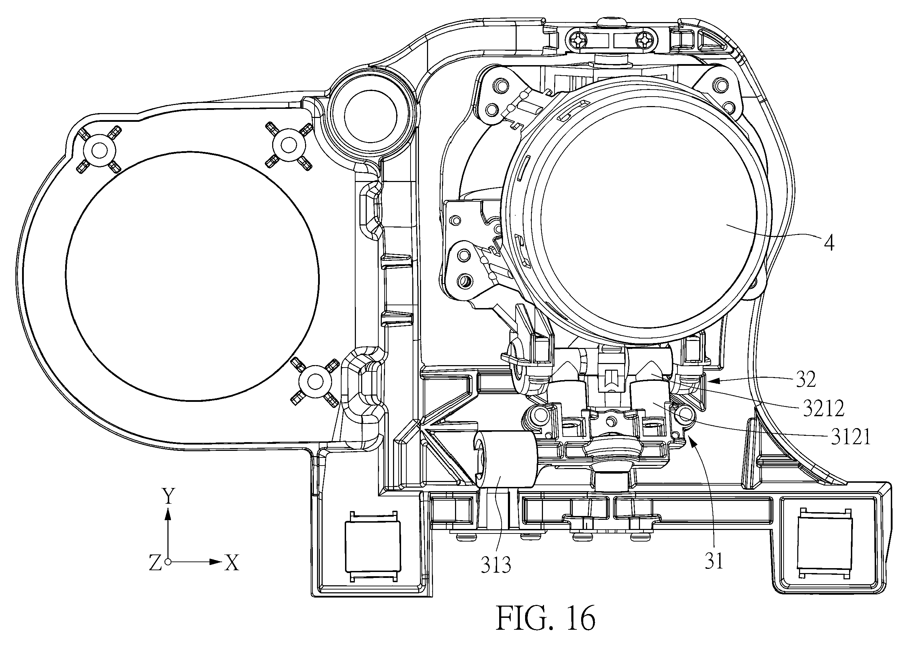

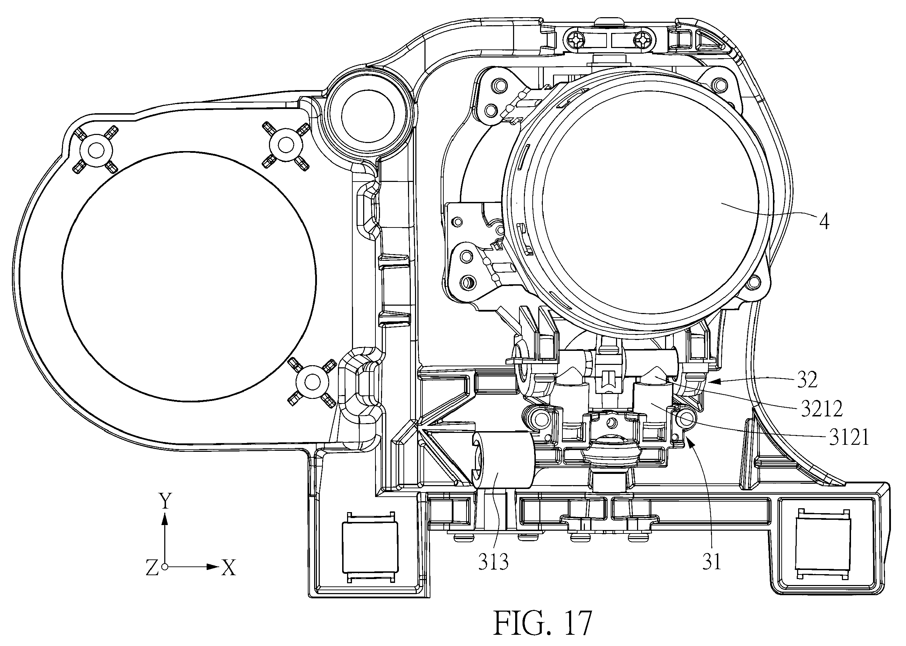

Please refer to FIGS. 16 to 17. When a vehicle V is cruising uphill/downhill or is making a turn, the first and second power driving units 2a, 2b can respectively drive the first and second rotation assemblies 31, 32 to tilt the lens assembly 4 toward upper left, upper right, lower left, and lower right directions. And the positional difference produced by the first and second rotation assemblies 31, 32 can be absorbed by the pole sleeves 3121 and the connecting poles 3212.

Based on the above, the vehicle illumination device according to the instant disclosure can provide automatic adjustment of illumination angles according to different road conditions and external environmental conditions. Therefore, when cruising uphill/downhill or making turns, the driver's view distance can be increased and the number of blind spots can be reduced.

Furthermore, the adjusting mechanism can simplify the conventional transmission mechanism in a vehicle lamp device and increase vehicle space utilization.

In addition, in the adjusting mechanism, the first and second rotation assemblies are driven via the ball joints and rotate in the left-right direction and in the up-down direction by the first and second rotation elements. Therefore, the adjustment accuracy and stability of an illumination angle of the lens assembly can be well ensured.

And the positional difference produced by the first and second rotation assemblies can be absorbed by the pole sleeves and the connecting poles.

The aforementioned descriptions merely represent the preferred embodiments of the instant disclosure, without any intention to limit the scope of the instant disclosure which is fully described only within the following claims. Various equivalent changes, alterations or modifications based on the claims of the instant disclosure are all, consequently, viewed as being embraced by the scope of the instant disclosure.

## Claims

1. A vehicle illumination device (D), comprising:
a support mount (1) having a pivot shaft (11) disposed at a bottom portion thereof;
a power driving assembly (2) arranged on the support mount (1), and including a first power driving unit (2a) and a second power driving unit (2b);
an adjusting mechanism (3), including:
a first rotation assembly (31) arranged on the support mount (1), wherein the first rotation assembly (31) includes:
a first rotation member (311) mounted for rotation on the pivot shaft (11);
a swing seat (312) having a bottom portion connected to the pivot shaft (11) via the first rotation member (311) and a top portion with a pair of pole sleeves (3121); and
a coupling structure (313) connected to one side of the swing seat (312) to be driven by the first power driving unit (2a);
a second rotation assembly (32) arranged on the support mount (1), wherein the second rotation assembly (32) includes:
a swing structure (321) including a shaft body (3211) and a pair of connecting poles (3212) connected to the shaft body (3211) and extending in a direction perpendicular to the axis of the shaft body (3211) to movably couple with the pole sleeves (3121);
a second rotation member (322) mounted for rotation on the shaft body (3211) and between the connecting poles (3212);
a guide rail (323) arranged on the support mount (1); and
a connecting holder (324) configured to reciprocately slide on the guide rail (323), wherein one end of the connecting holder (324) is connected to the shaft body (3211) via the second rotation member (322), and the other one of the connecting holder (324) is drivingly connected to the second power driving unit;
a pivot joint assembly (33) arranged on a top portion of the support mount (1) and corresponding in location to the first rotation assembly (31) and the second rotation assembly (32); and
a lens assembly (4) having a top portion connected to the pivot joint assembly (33) and a bottom portion pivoted on the shaft body (3211);
whereby the adjusting mechanism (3) is configured to be driven by the power driving assembly (2) to adjust a tilt angle of the lens assembly (4) relative to a horizontal reference plane and a vertical reference plane.

2. The vehicle illumination device of claim 1, wherein the bottom portion of the swing seat (312) has a first accommodation space to rotatably accommodate the first rotation member (311).

3. The vehicle illumination device of claim 1, wherein the connecting holder (324) includes a slide base (3241) coupled to the guide rail (323), a coupling socket (3242) arranged on the slide base (3241), and a coupling cover (3243) arranged on one side of the coupling socket (3242) to rotatably accommodate the second rotation member (322).

4. The vehicle illumination device of claim 1, wherein the pivot joint assembly (33) includes:
a connecting plate (331) having a support shaft (3311) passing through an open slot (13) on an top portion of the support mount (1);
a third rotation element (332) mounted for rotation on the support shaft (3311);
a position-limiting cover (333) connected to the top portion of the support mount (1) to provide a second accommodation space together with the open slot (13) to rotatably accommodate the third rotation element (332); and
a stop element (334) engaged to the support shaft (3311) to secure the third rotation element (332).

5. The vehicle illumination device of claim 1, wherein the bottom portion of the lens assembly (4) includes two first connecting covers (41), the shaft body (3211) has two opposite ends each having a ball shaft (32111) and a second connecting cover (32112), each of the two first connecting covers (41) is connected to the corresponding second connecting cover (32112) to cooperatively cover the corresponding ball shaft (32111) and enable rotation of the corresponding ball shaft (32111) about the axis of the shaft body (3211).
